# EUROPÄISCHE PATENTANMELDUNG

(11) **EP 2 845 774 A2**
(43) Veröffentlichungstag der Anmeldung: **11.03.2015**
(21) Anmeldenummer: 14183195.8
(22) Anmeldetag: 02.09.2014
(51) Int. Cl.: B60S 9/18

(54) **An der Deichsel eines Anhängers befestigbare Kurbelstütze und Schutzeinrichtung**

(30) Priorität: 04.09.2013 DE 102013109643
(71) Anmelder: Gebr. Vitte GmbH & Co., 58339 Breckerfeld (DE)
(72) Erfinder: Winterhoff, Ulrich, 58339 Breckerfeld (DE)
(74) Vertreter: Kleine, Hubertus

(57) **Zusammenfassung**

Eine Schutzeinrichtung, die ausgebildet ist durch eine Abdeckung, mit der eine Stirnseite eines Standrohres (3) einer an einem Anhänger befestigbaren Kurbelstütze (1) abdeckbar ist und an die sich ein im Querschnitt U-förmiger Arm (10) anschließt, der mit mindestens einem Rastelement (15) zum formschlüssigen Verbinden mit dem Kurbelarm (7) einer an der Stirnseite des Standrohres (3) angeordneten Handkurbel (2) versehen ist.

## Beschreibung

Die Erfindung betrifft eine an der Deichsel eines Anhängers befestigbare Kurbelstütze und eine Schutzeinrichtung.

Kurbelstützen kommen üblicherweise an Fahrzeuganhängern, Wohnwagen oder dergleichen zum Einsatz, wo sie mit deren Deichsel verbunden sind.

Dabei übernehmen sie Stütz- bzw. Rangierfunktion in dem Fall, dass der Anhänger oder Wohnwagen vom Zugfahrzeug abgekoppelt ist und händisch bewegt werden muss.

Zur Höhenverstellung eines Standrohres als Bestandteil der Kurbelstütze, um diese bei angekuppeltem Anhänger in eine Freilaufposition zu bringen, ist im Innern des Standrohres ein Spindeltrieb vorgesehen, der durch Drehen einer angeschlossenen Handkurbel betätigt wird.

Die Handkurbel besteht aus einem gebogenen Rundstahl, der an einem Ende mit dem Stellantrieb, d.h. einer Gewindespindel verbunden ist und auf dessen anderes, gekröpftes Ende, ein Knauf aufgesteckt ist.

Endseitig ist das Standrohr durch eine Platte verschlossen, die von einem mit der Gewindespindel verbundenen Zapfen durchdrungen ist und auf den die Handkurbel verdrehsicher aufgesetzt ist.

Anhänger und damit die angeschlossenen Kurbelstützen finden üblicherweise im Freien Verwendung und sind überwiegend der Witterung ausgesetzt. Dadurch neigt insbesondere die aus Stahl gefertigte Handkurbel zu Rostanfall, sofern sie nicht aus nichtrostendem Stahl gefertigt ist oder mit einer witterungsbeständigen Beschichtung versehen ist. Beides ist jedoch mit entsprechend hohen Kosten verbunden, wobei vor allem die Fertigung aus nichtrostendem Stahl aufgrund der Materialeigenschaften besondere Bearbeitungsmaßnahmen erfordert.

Darüber hinaus stellt der Übergang zwischen der Handkurbel und dem Spindeltrieb im Bereich der die zugeordnete Stirnseite des Standrohres abdeckenden Platte eine hinsichtlich der Dichtung problematische Zone dar, wobei stets die Gefahr besteht, dass Feuchtigkeit in das Innere des Standrohres hin zum Spindelantrieb gelangt, gleichfalls mit der Gefahr der Korrosion der innenliegenden Bauteile, wie Spindel und Spindelmutter, so dass deren Funktion dauerhaft nicht gesichert ist.

Um diesem Missstand vorzubeugen, sind daher entsprechende Maßnahmen erforderlich, insbesondere ein Einfetten des Spindeltriebs bzw. der daran beteiligten Funktionsteile, wozu allerdings bauliche Vorkehrungen getroffen sein müssen, wie Schmiernippel oder dergleichen, bis hin zur Demontage des Spindeltriebs.

Der Erfindung liegt die Aufgabe zugrunde, eine Kurbelstütze der gattungsgemäßen Art so weiterzuentwickeln bzw. eine Schutzeinrichtung zu schaffen, dass mit geringem konstruktivem Aufwand die Funktionssicherheit der Kurbelstütze verbessert wird.

Diese Aufgabe wird durch eine Schutzeinrichtung mit den Merkmalen des Anspruchs 1 sowie eine Kurbelstütze mit den Merkmalen des Anspruchs 10 gelöst.

Durch eine solche Schutzeinrichtung, die bevorzugt an einer an der Deichsel eines Anhängers befestigten Kurbelstütze zum Einsatz kommt, werden erhebliche Vorteile erreicht.

Hierzu ist zunächst einmal der Schutz der Handkurbel, insbesondere im Bereich des Kurbelarms sowie der Schutz des Endbereiches des Standrohres zu nennen, der der Handkurbel zugeordnet ist.

Dabei überdeckt die vorzugsweise als Kappe ausgebildete Abdeckung der Schutzeinrichtung diesen Endbereich sowohl an der Stirnseite des Standrohres wie auch einen Wandbereich, der sich an die Stirnseite anschließt.

Die bevorzugt aus Kunststoff, insbesondere im Spritzgussverfahren hergestellte Schutzeinrichtung ist dabei im Bereich ihrer Kappe im lichten Durchmesser so bemessen, dass sie mit geringem Spiel zur Wandung des Standrohres positioniert ist, so dass ein reibungsfreies Verdrehen gegenüber dem Standrohr bei Betätigung der Handkurbel gewährleistet ist.

Der sich an die Kappe anschließende Arm der Schutzeinrichtung überdeckt den Kurbelarm der Handkurbel vollständig sowohl oberseitig, also auf der dem Standrohr abgewandten Seite, wie auch beidseitig, wobei, gemäß der Erfindung, der Arm im Querschnitt U-förmig ausgebildet ist, während der Übergangsbereich der Kappe zum Arm eine Durchbrechung aufweist, so dass die Schutzeinrichtung problemlos auf den Kurbelarm und auf den Endbereich des Standrohres aufgesteckt werden kann.

Als Zentrierhilfe kann die Kappe konzentrische Ringabschnitte aufweisen, in denen in Funktion ein Anschlussteil des Kurbelarmes zur Verbindung mit dem Spindeltrieb anliegt.

Für eine formschlüssige Verbindung des Kurbelarmes mit der Schutzeinrichtung, d.h. mit deren Arm, sind darin bevorzugt mehrere federnde Rastnasen vorgesehen, die beim Aufstecken der Schutzeinrichtung auf die Handkurbel aufspreizen und in einer Endposition den Kurbelarm teilweise umgreifen.

Neben dem erwähnten Witterungsschutz, durch den die Standzeit der Kurbelstütze insgesamt verbessert und der Wartungsaufwand vermindert wird, bietet die Schutzeinrichtung auch einen Verletzungsschutz durch Abdeckung von scharfen Kanten der Kurbelstütze, die ansonsten bei einer Drehbewegung der Handkurbel zu Verletzungen führen könnten.

Im Übrigen ist die Schutzeinrichtung sowohl für eine Erstausrüstung an Kurbelstützen geeignet, wie auch für eine Nachrüstung vorhandener Kurbelstützen, wobei die Abdeckung ebenso wie der Arm farblich, insbesondere in Signalfarben gestaltet und als Werbeträger genutzt werden können.

Nach einem weiteren Gedanken der Erfindung ist seitlich an der Schutzeinrichtung, vorzugsweise an der Mantelfläche der Kappe, ein, bezogen auf das Standrohr axial verschiebbarer Sperrbolzen gehalten, der in Funktion, d.h. während des Fahrbetriebs in Richtung des Standrohres vorsteht und an einem ortsfesten Anschlag anliegt. Dieser Anschlag kann beispielsweise durch einen am Standrohr gehaltenen Schmiernippel gebildet sein, über den ein Schmiermittel in das Innere des Standrohres hin zum Spindeltrieb führbar ist.

Damit wird eine durch fahrtbedingte Erschütterungen verursachte unbeabsichtigte Verdrehung der Handkurbel und damit eine axiale Verstellung des Stützrades während der Fahrt verhindert.

Gleichermaßen ist eine Verdrehsicherung gegeben, wenn die Kurbelstütze in Funktion steht, d.h., wenn das Stützrad bei abgekuppeltem Anhänger ausgefahren ist und flurseitig aufsteht.

Bevorzugt ist der Sperrbolzen federbelastet in ausgeschobener Stellung gehalten, während er in eingeschobener Stellung beispielsweise durch Verdrehen in eine Raststellung sicher gehalten ist, um ein ungehindertes Verdrehen der Handkurbel zu gewährleisten.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Kurbelstütze mit einer erfindungsgemäßen Schutzeinrichtung in einer Seitenansicht
- Figur 2: einen Teil der Kurbelstütze mit einer Schutzeinrichtung in einer Explosionsdarstellung
- Figuren 3 und 4: jeweils einen Teil der Kurbelstütze in unterschiedlichen Ansichten.

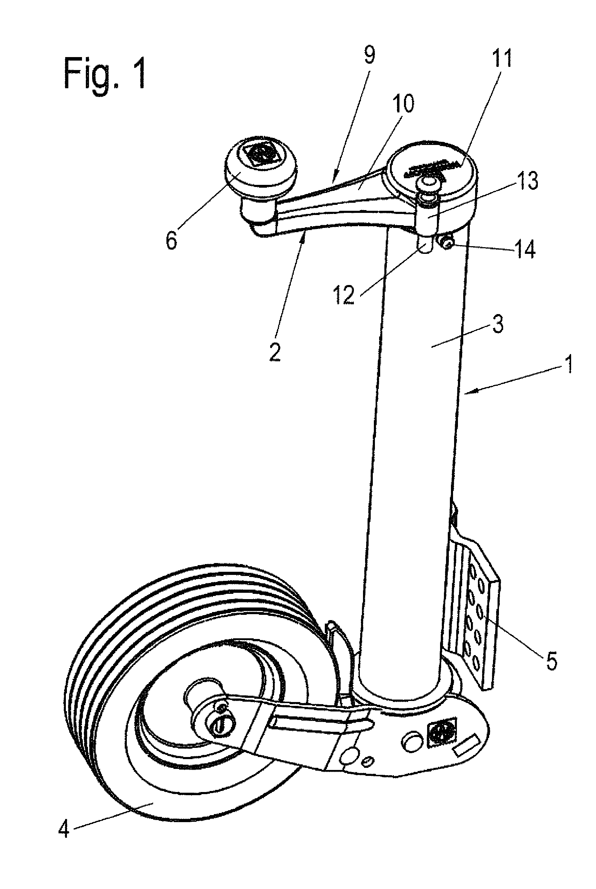

In der Figur 1 ist eine Kurbelstütze 1 dargestellt, die mittels eines an einem Standrohr 3 angeschlossenen Flansches 5 an der Deichsel eines nicht gezeigten Anhängers befestigbar ist.

Einem Endbereich des Standrohres 3 zugeordnet ist ein Stützrad 4, das über einen im Innern des Standrohres 3 angeordneten Spindeltrieb mittels einer angeschlossenen Handkurbel 2 gegenüber dem insoweit ortsfesten Standrohr 3 höhenverstellbar ist.

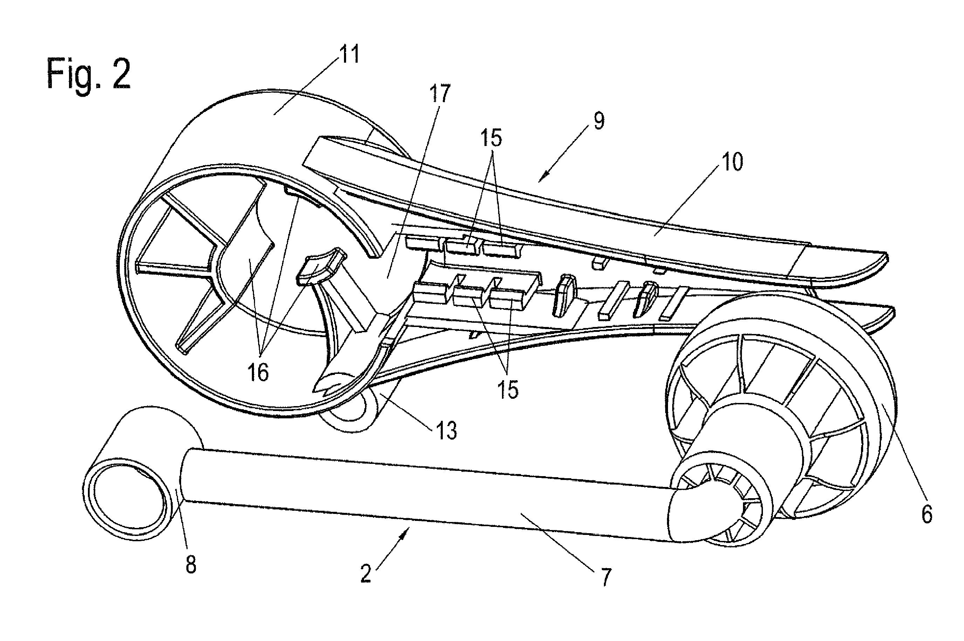

Wie insbesondere die Figur 2 sehr deutlich wiedergibt, weist die Handkurbel 2 einen Kurbelarm 7 auf, an dem einerseits ein Knauf 6 und andererseits eine hülsenförmige Aufnahme 8 angeschlossen sind, wobei die Aufnahme 8 verdrehsicher an einer Gewindespindel des Spindeltriebs befestigt ist.

Gemäß der Erfindung ist eine Schutzeinrichtung 9 formschlüssig mit der Handkurbel 2 verbunden. Dabei besteht die Schutzeinrichtung 9, die als Einzelheit in der Figur 2 erkennbar ist, aus einer zylinderförmigen Kappe 11 und einem sich daran anschließenden, im Querschnitt U-förmigen Arm 10, der den Kurbelarm 7 auf seiner dem Stützrad 4 abgewandten Seite sowie abgewinkelt dazu seitlich überdeckt, wobei sich der Arm 10 bis in den Überdeckungsbereich des Knaufs 6 erstreckt.

Zwischen der Kappe 11 und dem Arm 10 ist eine Durchbrechung 17 vorgesehen, durch die der Kurbelarm 7 aus dem Arm 10 geführt ist.

Zur Zentrierung der Kappe 11 sind konzentrische Ringabschnitte 16 angeformt, die außenseitig an der Aufnahme 8 anliegen.

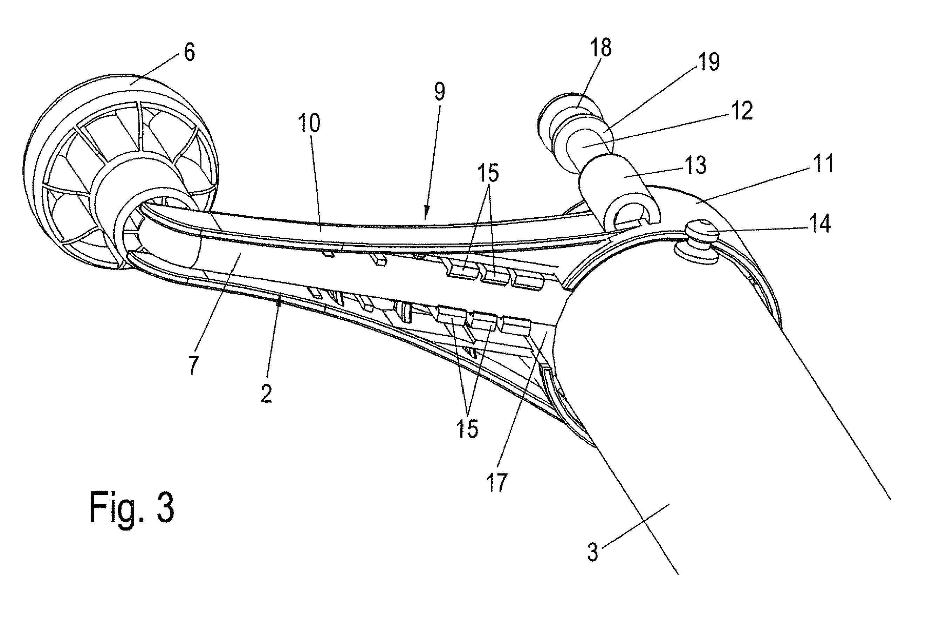

Zum formschlüssigen Halt der Schutzeinrichtung 9 an der Handkurbel 2 sind im Arm 10 mehrere federnde Rastnasen 15 vorgesehen, die zu zwei sich gegenüberliegenden Reihen zusammengefasst sind und die, wie besonders deutlich in der Figur 3 zu erkennen ist, den Kurbelarm 7 teilweise umgreifen.

Weiter seitlich ist an der Schutzeinrichtung 9 eine Führungshülse 13 befestigt, in der ein Sperrbolzen 12 axial verschiebbar geführt ist. In der Figur 3 ist der Sperrbolzen 12 außer Funktion gesetzt. In dieser Position ist die Handkurbel 2 zur Verstellung des Stützrades 4 verdrehbar.

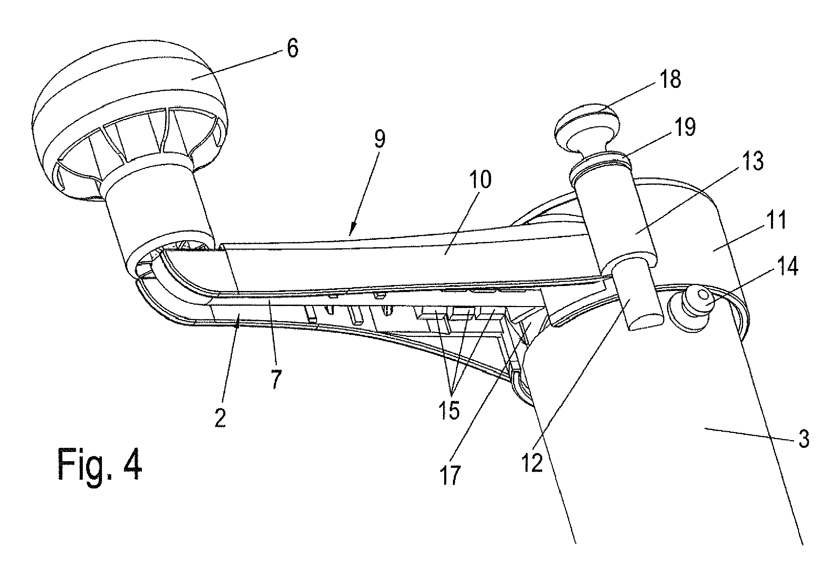

In der Figur 4 hingegen ragt der Sperrbolzen 12 aus der Führungshülse 13 heraus bis in einen Überdeckungsbereich mit dem Standrohr 3, wobei daran ein Anschlag 14, beispielsweise ein Schmiernippel, befestigt ist, an dem der Sperrbolzen 12 zur Vermeidung einer ungewollten Drehbewegung der Handkurbel 2 anliegt.

Die Arretierung des Sperrbolzens 12, der im Übrigen endseitig ein Griffstück 18 und ein Anschlagbündchen 19 aufweist, kann auf unterschiedliche Art und Weise in der jeweiligen Endstellung arretiert sein.

## Patentansprüche

1. Schutzeinrichtung, **gekennzeichnet durch** eine Abdeckung, mit der eine Stirnseite eines Standrohres (3) einer an einem Anhänger befestigbaren Kurbelstütze (1) abdeckbar ist und an die sich ein im Querschnitt U-förmiger Arm (10) anschließt, der mit mindestens einem Rastelement (15) zum formschlüssigen Verbinden mit dem Kurbelarm (7) einer an der Stirnseite des Standrohres (3) angeordneten Handkurbel (2) versehen ist.

2. Schutzeinrichtung nach Anspruch 1, **dadurch gekennzeichnet, dass** die Abdeckung als Kappe (11) ausgebildet ist, deren offene Seite und die offene Längsseite des Armes (10) gleichgerichtet sind.

3. Schutzeinrichtung nach Anspruch 1 oder 2, **dadurch gekennzeichnet, dass** die Kappe (11) zum Innern des Armes (10) eine Durchbrechung (17) aufweist.

4. Schutzeinrichtung nach einem der vorhergehenden Ansprüche, **dadurch gekennzeichnet, dass** die Rastelemente (15) aus sich gegenüberliegenden federnden Rastnasen bestehen.

5. Schutzeinrichtung nach einem der vorhergehenden Ansprüche, **dadurch gekennzeichnet, dass** im Innern der Kappe (11) konzentrisch angeordnete Ringabschnitte (16) vorgesehen sind.

6. Schutzeinrichtung nach einem der vorhergehenden Ansprüche, **dadurch gekennzeichnet, dass** im Mantelbereich der Kappe (11) eine Führungshülse (13) angeordnet ist, in der ein parallel zur Mittelachse verlaufender Sperrbolzen (12) axial verschiebbar gehalten ist.

7. Schutzeinrichtung nach einem der vorhergehenden Ansprüche, **dadurch gekennzeichnet, dass** der Sperrbolzen (12) in beiden Endstellungen arretiert gehalten ist.

8. Schutzeinrichtung nach einem der vorhergehenden Ansprüche, **dadurch gekennzeichnet, dass** der Sperrbolzen (12) in einer Endstellung über den Rand der Kappe (11) ragt.

9. Schutzeinrichtung nach einem der vorhergehenden Ansprüche, **gekennzeichnet durch** die Ausbildung als Kunststoffteil, vorzugsweise als Kunststoff-Spritzgussteil.

10. An der Deichsel eines Anhängers befestigbare Kurbelstütze (1), mit einem Standrohr (3), in dem ein durch eine stirnseitig positionierte Handkurbel (2) verdrehbarer Spindeltrieb gelagert ist, wobei die Handkurbel (2) einen Kurbelarm (7) und einen Knauf (6) aufweist, **dadurch gekennzeichnet, dass** die Schutzeinrichtung (9) nach Anspruch 1 formschlüssig am Kurbelarm (7) gehalten ist, wobei ihre Abdeckung die der Handkurbel (2) zugeordnete Stirnseite des Standrohres (3) überdeckt.

11. Kurbelstütze nach Anspruch 10, **gekennzeichnet durch** die Abdeckung als Kappe (11) ausgebildet ist.

12. Kurbelstütze nach Anspruch 10 oder 11, **dadurch gekennzeichnet, dass** sich der Arm (10) der Schutzeinrichtung (9) bis in den Bereich des Knaufes erstreckt.

13. Kurbelstütze nach einem der Ansprüche 10 bis 12, **dadurch gekennzeichnet, dass** der lichte Durchmesser der vorzugsweise zylinderförmigen Kappe (11) geringfügig größer ist als der Außendurchmesser des Standrohres (3).

14. Kurbelstütze nach einem der Ansprüche 10 bis 13, **dadurch gekennzeichnet, dass** die Ringabschnitte (16) an einer Aufnahmehülse (8) der Handkurbel (2) anliegen.

15. Kurbelstütze nach einem der Ansprüche 10 bis 14, **dadurch gekennzeichnet, dass** der Sperrbolzen (12) in Sicherungsstellung an einem Anschlag (14) des Standrohres (3) anliegt.

16. Kurbelstütze nach einem der Ansprüche 10 bis 15, **dadurch gekennzeichnet, dass** die Rastnasen (15) den Kurbelarm (7) bereichsweise übergreifen.
